# EUROPEAN PATENT APPLICATION

(11) **EP 2 034 197 A1**
(43) Date of publication of application: **11.03.2009**
(21) Application number: 06757328.7
(22) Date of filing: 15.06.2006
(51) Int. Cl.: F16B 39/02

(54) **FIXATION DEVICE**

(71) Applicant: SUZUKI, Masao, Koganei-shi, Tokyo 184-0002 (JP)
(72) Inventor: IKEDA, Eiji, Kitakatsuragi-gun, Nara 636-0072 (JP)
(74) Representative: Lord, Michael
(86) International application number: PCT/JP2006/311980
(87) International publication number: WO 2007/144946

(57) **Abstract**

The object of the invention is to provide a fixing implement which fulfills an excellent looseness prevention function while firmly fastening a member using an irreversible looseness prevention device, which is excellent in durability, workability when fixing the member and corrosion resistance and which can firmly fastens the member without increasing the number of component parts. The fixing implement includes a bolt section 1 that has a male screw portion 11 having part thereof provided with a thread cutout portion 12 formed to have an appropriate groove width in an axial direction, and a nut section 2 that has an extending cylindrical portion 21 at a position corresponding to a position of the thread cutout portion 12 when the nut section 2 has been fastened and screw-fitted to the bolt section 1, the cylindrical portion 21, when having been crushed by application of pressure in a diameter-reducing direction with a tool including a crushing tool 3 after fixing and screw-fitting the bolt and nut sections 1 and 2 at a prescribed position, entering the thread cutout portion 12 to fasten and screw-fit the nut section 2 to the bolt section 1.

## Description

### Technical Field:

The present invention relates to a fixing implement for maintaining a fixed state between members and providing no looseness and particularly to a fixing implement to be used in the places undergoing vigorous vibration from outdoor roads and railroads and requiring endurance.

### Background Art:

A bolt and a nut by which parts are fixed to various mechanical apparatus or a bolt and a nut used in fixing steel beams of a building have heretofore been prone to loosen gradually in the screw-fitting direction due to vibration that is an external factor given to the mechanical apparatus. Various means for preventing the nut from loosening have been proposed. For example, means using a spring washer can be cited.
The spring washer has a part thereof cut off and one end thereof slightly bent in the conflicting direction. When the nut is fixed by screw fitting to the bolt, with the spring washer intervening therebetween, resiliency of the end of the spring washer bent slightly in the conflicting direction prevents the nut from loosening.
The spring washer can be expected to have the effect of looseness prevention immediately after being fixed. However, use of the spring washer over a long period of time lowers its resiliency to reduce the effect of looseness prevention.

Means having a pin penetrated into a nut can also be cited. In the means having the pin penetrated into the nut, holes are bored in the thread part of a bolt and the nut in common with each other and a pin, such as a split pin or a tapered pin, is inserted into the holes to infallibly prevent the looseness of the nut.
However, there is a case where the pin cannot be inserted when the positions of the holes have been not in alignment with each other. In addition, when it is intended to fasten the nut to the bolt so that the positions of the holes may be in alignment with each other, there gives rise to a state of the nut being fixed to the bolt more loosely than usual. Thus, failure to firmly fix the nut to the bolt is problematic.

Furthermore, a double nut has heretofore been in heavy usage as simple means for looseness prevention. The double nut comprises a fixing nut and a looseness prevention nut on the fixing nut and is used such that the inside nut is fixed to a bolt and the outside nut is further fixed firmly to the bolt.
In this method, since one place has to be fixed twice with the double nut and since the operation process of fixing the bolt with only the outside nut has to be additionally taken, the fixing process becomes very cumbersome. Particularly, in a mechanical apparatus or building requiring a great number of nuts to be fixed to bolts, the fixing process is prone to constitute a cause of delay of the operation process. In addition, the operation for individually confirming that the outside looseness prevention nuts have been firmly fixed to the bolts is also cumbersome. Another problem is that it is forgotten to fix the nuts twice.
In view of the above, as means for completely preventing looseness of a bolt and a nut on the premise that the bolt and nut are never unfixed, the technique described in Patent Document 1 has been proposed.

In the technique described in Patent Document, the configuration in which a stopper pin is driven in a vertical groove cut in the fixed nut so as to crush the thread of the male screw of the bolt, thereby fixing the bolt and the nut, has been proposed.
In the technique described in Patent Document 1, though the effect of preventing looseness between the bolt and the nut can be expected to some extent, there is a possibility of the pin falling off during use. To be specific, the pin is slightly harder than the bolt and is not always integrated with the bolt. The pin possibly falls off by the external factor, such as vibration from outdoor highways or railroads, and cannot be used without any modification.
In view of the above, the present applicant has proposed the technique described in Patent Document 2.

The technique described in Patent Document is established in consideration of the issue of incompleteness of screw looseness prevention and is the one for providing a fixing implement having a premise that the bolt and nut are never unfixed and using irreversible looseness prevention means for completely preventing looseness between a bolt and a nut to enhance the reliability of threadable mounting.

Furthermore, Patent Document 3 relates to a detachment prevention apparatus having a coil spring accommodated in a hexagonal nut and a bolt fastened to the hexagonal nut. In the detachment prevention apparatus, inverse rotation of the hexagonal nut relative to the bolt causes one end of the coil spring to be deformed and fractured, thereby allowing the hexagonal nut to go in circles relative to the thread part of the bolt and to the coil spring to attain detachment prevention.

Patent Document 1: JP-A 2001-27217
Patent Document 2: JP-A 2004-132518
Patent Document 3: JP-A 2003-343536

### Disclosure of the Invention:

### Problems to be solved by the Invention:

However, the looseness prevention using a bolt and a nut of this kind requires a resistance to vibration from the standpoint of safety. For example, demanded is a fixing implement that induces no looseness even under vibration on million times. Though the fixing implement of Patent Document 2 can exhibit the looseness prevention under vibration to some extent, there is demand for a fixing implement capable of fulfilling large length and high endurance relative to further vibration.
Furthermore, since it is necessary for the fixing implement of Patent Document 2 to collapse thread of the bolt when the bolt and nut are crushed flatly, a crushing tool having a high crushing ability has to be used, and a tool to be operated by a hydraulic pressure of 2000 kgf, for example, is to be used. For this reason, the fastening workability does not become goods and, at the same time, an exclusive large-sized tool is to be used.

On the other hand, since the detachment prevention apparatus of Patent Document 3 uses the spring, problems are posed in an increase of the number of component parts and high cost. In addition, since the pin is generally made of iron, it is prone to rust to pose a problem in low corrosion resistance.

The present invention has been developed in order to solve the problems encountered heretofore and the object thereof is to provide a fixing implement which uses irreversible looseness prevention means to firmly fix members and exhibits an excellent looseness prevention function to enable looseness prevention, which is excellent in durability, workability at the time of fastening and corrosion resistance and which enables firm fixing without increasing the number of component parts.

### Means for solving the Problems:

To attain the above object, the invention according to claim 1 is directed to a fixing implement comprising a bolt section that has a male screw portion having part thereof provided with a thread cutout portion formed to have an appropriate groove width in an axial direction, and a nut section that has an extending cylindrical portion at a position corresponding to a position of the thread cutout portion when the nut section has been fastened and screw-fitted to the bolt section, the cylindrical portion, when having been crushed by application of pressure in a diameter-reducing direction with a tool including a crushing tool after fixing and screw-fitting the bolt and nut sections at a prescribed position, entering the thread cutout portion to fasten and screw-fit the nut section to the bolt section.

The invention according to claim 2 is directed to a fixing implement comprising a bolt section that has a male screw portion having part thereof provided with a thread cutout portion formed to have appropriate groove widths in axial and diametrical directions, and a nut section that has an extending cylindrical portion at a position corresponding to a position of the thread cutout portion when the nut section has been fastened and screw-fitted to the bolt section, the cylindrical portion, when having been crushed by application of pressure in a diameter-reducing direction with a tool including a crushing tool after fixing and screw-fitting the bolt and nut sections at a prescribed position, entering the thread cutout portion to fasten and screw-fit the nut section to the bolt section.

The invention according to claim 3 is directed to the fixing implement, wherein the thread cutout portion is formed at two or more places in a diametric direction of the male screw portion of the bolt section.

The invention according to claim 4 is directed to the fixing implement, wherein the bolt section has a head portion provided with a reference portion indicating a position of the thread cutout portion.

### Effects of the Invention:

According to the invention set forth in claim 1 or 2, it is possible to provide a fixing implement which fulfills an excellent looseness prevention function over a long period of time using irreversible looseness prevention means to prevent a member from being detached under vibration or external rotating force while firmly fastening the member with integrally fixed bolt and nut sections, which is excellent in durability, workability when fixing the member and corrosion resistance and which can firmly fastens the member without increasing the number of component parts.
In addition, the nut of the fixing implement comprises the nut section and the cylindrical portion and, since the cylindrical portion is provided therein with no thread and has a small thickness, it is possible to crush the cylindrical portion with a small pressure to enter the thread cutout portion.
Furthermore, the component parts of the fixing implement are simple in configuration and can be manufactured at low cost. Moreover, the fixing implement can readily be handled in operation similarly to a conventional bolt-and-nut fixing implement and can enhance the operating efficiency to a great extent.

In the invention set forth in claim 1, particularly, it is possible to provide the fixing implement that can prevent the bolt and nut from being loosened by the relative rotation in the diametric direction.
On the other hand, in the invention set forth in claim 2, it is possible to provide the fixing implement that can prevent the fixing implement body from being loosened in the axial direction to detach the bolt and the nut from each other.

According to the invention set forth in claim 3, it is possible to provide the fixing implement that can attain fastening with a stable intensity without biasing the fastening intensity and maintain the fastened and fixed state even when receiving vibration or external force in the ominidirection.

According to the invention set forth in claim 4, it is possible to provide the fixing implement that can fasten the bolt and the nut, with their positions confirmed readily, and enhance the workability.

### Best Mode for carrying out the Invention:

Fixing implements of the present invention will be described hereinafter in detail with reference to the drawings.

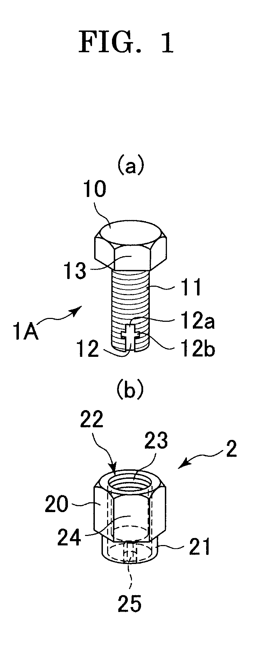

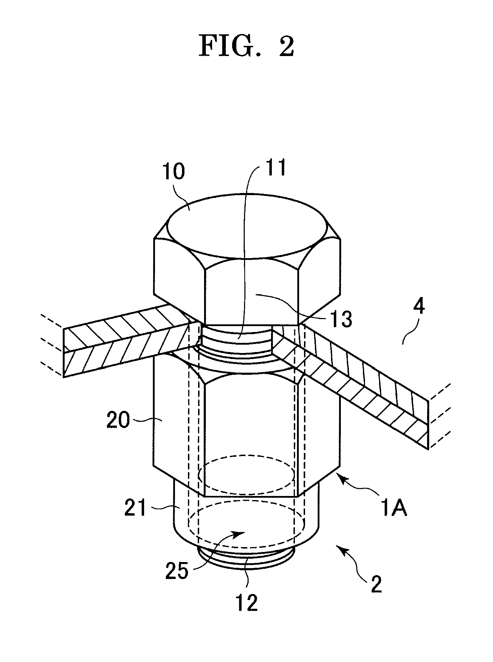

FIG. 1 and FIG. 2 show a fixing implement according to the first embodiment of the present invention. A fixing implement body 1A of the present invention is formed of a suitable material of metal, such as aluminum, aluminum alloy or stainless steel. In particular, a fixing implement body 1A of aluminum or aluminum alloy prefers to be used because it is not so hard and is easy to crush with a small force.

Furthermore, it is desirable that the fixing implement body 1A be formed of a material having corrosion resistance. When the material for a member to be fixed differs from the material for the fixing implement body 1A, a potential difference is induced between the two materials, resulting in possibly imparting electrical corrosion to the fixing implement body. However, this can be avoided if the material for the fixing implement body 1A is selected in advance in consideration of the material for the member to be fixed. The fixing implement body 1A comprises a bolt section 1 and a nut section 2 capable of being screw-fitted to the bolt section 1. When the bolt section 1 and nut section 2 are formed of the same material, it is possible to prevent a potential difference from being produced between the two. It is noted, however, that the fixing implement body 1A may be formed of a material other than a metal having corrosion resistance, such as iron.

The bolt section 1 comprises, similarly to an ordinary bolt, a head portion 10 having a shape, such as a hexagonal shape, suitable for being swiveled with a swiveling implement not shown, such as a spanner, and a male screw portion 11 rotated when the head portion 10 has been swiveled.

The male screw portion 11 is screw-fitted to a female screw portion 23 formed in the nut section 2. The screw specifications including pitches and heights, not shown, of the male screw portion 11 and female screw portion 23 are not particularly limitative, but may freely be set in compliance with the ordinary standards insofar as the male and female screw portions can be screw-fitted to each other.

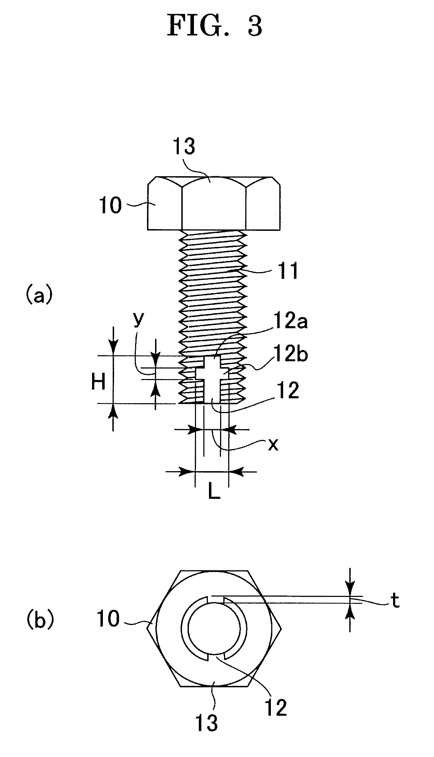

The male screw portion 11 has a thread cutout portion 12 resulting from cutting out part of the bolt section 1 in the axial and diametrical directions thereof. This cutout portion 12 is formed to have an appropriate groove width by cutting out part of the male screw portion 11, which part has a prescribed width. In the present embodiment, as shown in FIG. 1 and FIG. 3, the cutout portion 12 has a substantially cruciform shape comprising a vertical groove 12a formed in the axial direction to have a width *x* and a height *H* and a transverse groove 12b formed in the diametrical direction to have a width *y* and a length *L*. The choice of the substantially cruciform shape for the cutout portion 12 enables the nut section 2 to be prevented from moving in the axial and diametrical directions relative to the bolt section 1 when the two sections have been fixed by screw-fitting.
In the present embodiment, the widths *x* and *y* of the vertical and transverse grooves 12a and 12b are 4 mm and 3 mm, respectively. The height *H* is 11 mm, and the length *L* is 7 mm. The cutout portion 12 has a depth *t* of 3 mm.

The cutout portion 12 is desirably disposed at two or more places in the diametric direction of the male screw portion 11. In the case of a bolt having a diameter of 10 mm or less, for example, the cutout portion is disposed at two places and, in the case of a bolt having a diameter of 12 mm or more, the cutout portion is disposed at three or four places. The cutout portions are disposed at an equidistant angle of 120° in the case of the three places and, in the case of the four places, at an equidistant angle of 90°, both relative to the diametric direction. In addition, the cutout portion may be disposed at five or more places.

The reasons why the cutout portions 12 are equidistantly disposed are to firstly form a configuration in which a cylindrical portion 21 of the nut section 2 that will be described later is crushed into a crush portion 25 that is inserted under pressure into the cutout portion 12, thereby alleviating the remaining stress of the nut section 2 per se to prevent the strength from being reduced and secondly to make the production ready in the case of the equidistant disposition when crushing the cylindrical portion with a crushing tool 3.

In the case where the dimension of the member 4 to be fixed in the width direction is known in advance, the length at the time the member 4 to be fixed has been clamped between the bolt section 1 and the nut section 2 can be set in advance so that the cutout portion 12 may be disposed at the position of the cylindrical portion 21, thereby enabling the crush portion 25 formed in consequence of crushing the cylindrical portion 21 from above to be infallibly inserted into the cutout portion 12. In addition, since a base portion 20 of the nut section 2 can be provided to have a prescribed height, the length of screw-fitting between the male screw portion 11 and the female screw portion 23 can sufficiently be secured to maintain the screw-fitting force at the same level as in the case of the screw-fitting of an ordinary bolt-and-nut combination and to secure the strength.

The nut section 2 of the fixing implement body 1A comprises the base portion 20 having a suitable shape, such as a prismatic shape, and the cylindrical portion 21 disposed on the bottom of the base portion 20 and is provided in the inner circumference of the base portion 20 with the female screw portion 23 that can be screw-fitted to the male screw portion 11 of the bolt section 1. The outer circumference of the base portion 20 may be formed in an appropriate shape suitable for a swiveling implement not shown, such as a spanner, with a hexagonal prismatic column as the standard.

The cylindrical portion 21 has an inside diameter which is larger than the inner circumference of the female screw portion and which is the size large enough for the male screw portion 11 to be inserted therein when the bolt section 1 has been screw-inserted into the nut section 2.
As described above, the cylindrical portion 21 is disposed at the position corresponding to the cutout portion 12 of the bolt section 1 when the nut section 2 has been fixed by screw fitting. The thickness of the cylindrical portion 21 is varied depending on the material used and is in the range of 1.0 to 1.2 mm when the nut section 2 is formed of an aluminum material, and the width of the cylindrical portion has a length suitable for the length of the cutout portion 12, i.e. around 6 mm, for example.
In addition, the base portion 20 is desirably formed in an appropriate length so as to fulfill the function to prevent deformation of the entire nut section 2 and prevent reduction in the fixing force required for the fixing implement when the cylindrical portion 21 is crushed.

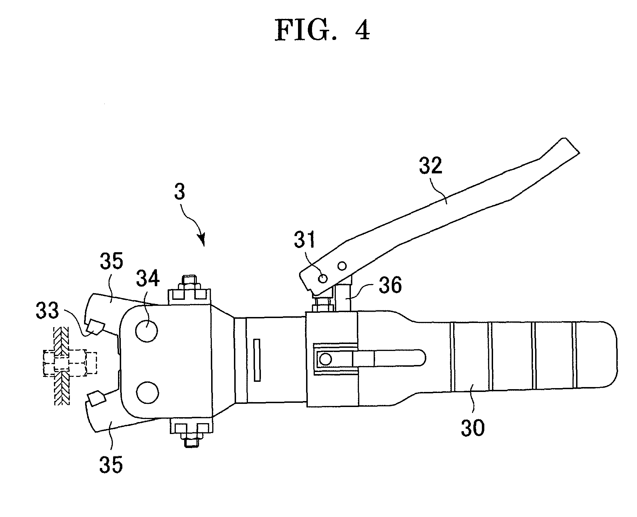

FIG. 4 shows an example of the crushing tool 3 for crushing the cylindrical portion 21. This crushing tool 3 comprises a grasp portion 30 disposed at the proximal side thereof, an operation handle 32 pivotally supported relative to the grasp portion 30 via pivots 31 and crushing arms 35 disposed at the distal side thereof, provided with crushing heads 33 directed inward and having the back ends pivotally supported via pivot portions 34.

When the crushing tool 3 is used to crush the cylindrical portion, the bolt section 1 and nut section 2 are fixed by screw fitting at a prescribed position and then the operation handle 32 of the crushing tool 3 is operated. When the operation handle 32 is grasped downward, it is rotated around the pivots 31 to depress a plunger 36 downward. When the plunger 36 has been depressed downward, the pressure produced is increased via a hydraulic circuit not shown to rotate the crushing arms 35 inward around the pivot portions 34. When the crushing arms 35 have been rotated, the crushing heads 33 at the distal ends of the crushing arms 35 can apply pressure to the cylindrical portion 21 in the diameter-reducing direction. The cylindrical portion 21 is thus crushed.

Next, the operating procedure taken when the fixing implement body 1A is fixed will be described.
The fixing implement body 1A is used for fixing a soundproof wall receiving vigorous vibration from outdoor roads, railroads, etc. and requiring endurance.

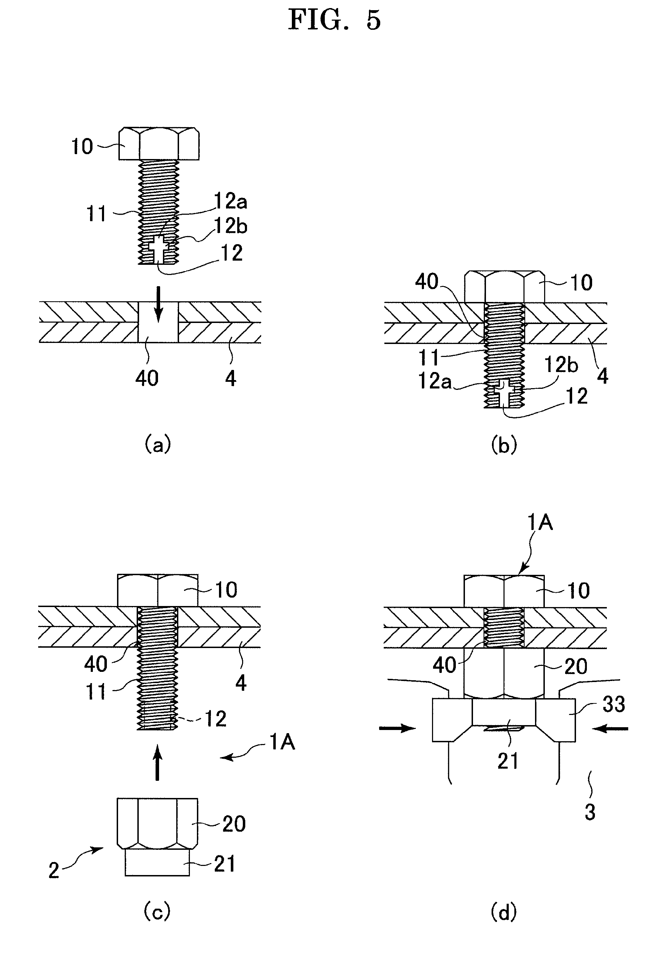

In FIG. 5, firstly the male screw portion 11 of the bolt section 1 is inserted into a hole portion 40 of the member 4 to be fixed, which member is a part of the soundproof wall (FIG. 5(a) and FIG. 5(b)).
Then, the female screw portion 23 of the nut section 2 is screw-fitted to the male screw portion 11 of the bolt section 1 to complete fixation by screw-fitting (FIG. 5(c)).

Subsequently, as shown in FIG. 5(d), in the fixing implement body 1A having undergone fixation by screw-fitting, the crushing heads 33 of the crushing tool 3 are brought to a state of being applied from above to the cylindrical portion 21 covering the cutout portion 12 of the bolt section 1 and then the operation handle 32 is grasped downward to crush the cylindrical portion with the crushing heads 33.
When the cylindrical portion 21 has been crushed, the cylindrical portion 21 is partially deformed and inserted under pressure into the concave cutout portion 12, with the result that the nut section 2 is fastened and fixed to the bolt section 1.

Thus, the bolt section 1 and nut section 2 can be integrally fastened and fixed to each other, without use of a crushing tool utilizing a major-scale hydraulic circuit, through the procedure comprising forming in advance the cutout portion 12 in the bolt section 1 and crushing the cylindrical portion 21 of the nut section 2 with a small crushing force by a manual crushing tool into the crush portion 25 to be inserted under pressure into the cutout portion. This fastening can be attained with exactitude even when the fixing implement is made of stainless steel that is harder than aluminum. Thus, the procedure can be applied to any kind of material of which the fixing implement is made.

In the fixing implement body 1A according to the above embodiment of the present invention, part of the male screw portion 11 of the bolt section 1 is provided therein with the cutout portion 12 comprising the vertical groove 12a having the width x and transverse groove 12b having the width *y*, and the nut section 2 has the cylindrical portion 21 formed as extending therefrom so as to be disposed at the position corresponding to that of the cutout portion 12 when the nut section 2 has been fastened and screw-fitted to the bolt section. With this configuration, after the bolt section 1 and nut section 2 are screw-fitted and fixed to each other at the prescribed position, a tool, such as the crushing tool 3, is used to apply pressure to the cylindrical portion 21 in the diameter-reducing direction to crush the cylindrical portion to enter the cutout portion 12, thereby fastening and fixing the nut section 2 to the bolt section 1. Therefore, since the crush portion 25 can be inserted under pressure to bite into the groove-shaped cutout portion 12, the bolt section 1 and nut section 2 can firmly be integrated. Since the cutout portion 12 has a cruciform shape, the pressure insertion of the crush portion 25 into the vertical groove 12a enables preventing the bolt section 1 and nut section 2 from being displaced from each other in the axial direction.

Thus, it is possible to prevent three-dimensional relative movement in the axial and diametrical directions between the bolt section 1 and the nut section 2 and, when the fastening and fixation has been attained with the bolt and nut sections 1 and 2, it is possible to prevent looseness even under omnidirectional vibration. Furthermore, since the bolt and nut sections are strong in vibration, they can exhibit high resistance to vibration even when having been used in a place receiving a great number of vibrations and exhibit excellent endurance to maintain firm fixation over a long period of time.

The present invention does not require use of a large-scale tool because the threads are not crushed in the crushing operation and, since fastening can easily be attained with the compact, manually operated crushing tool 3, the operability can be enhanced and rapid operation can be attained even in a narrow space.

In addition, since the fixing implement body 1A comprises the bolt section 1 and the nut section 2, it can be produced at low cost without increasing the number of component parts and, when it is made of corrosion-resistant metal, such as aluminum, aluminum alloy or stainless steel, it is possible to prevent rust. Particularly when the fixing implement body 1A is made of soft metal, such as aluminum, it is ready to process and easy to mass-produce.

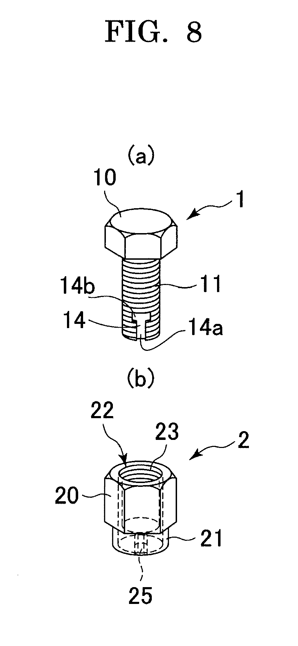

FIG. 8 shows a fixing implement according to the second embodiment of the present invention. Incidentally, in the second and subsequent embodiments, the same portions as in the preceding embodiment are given the same reference numerals and the description thereof will be omitted.
Though the fixing implement is the same as that of the preceding embodiment in the aspect that a cutout portion 14 comprising a vertical groove 14a and a transverse groove 14b, it differs from the preceding embodiment in that the cutout portion 14 is formed in a T shape. Even in the case of the T-shaped cutout portion, the same effect of preventing looseness can be acquired and it is possible to prevent detachment between the bolt section and the nut section in the axial and diametrical directions.

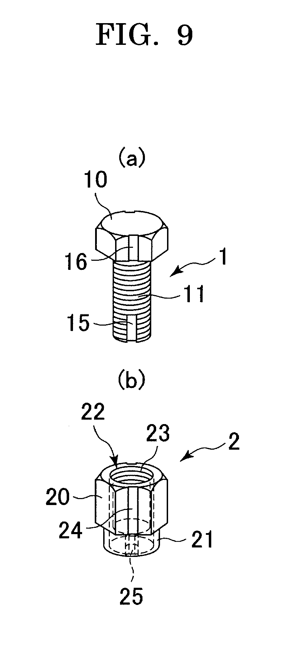

FIG. 9 shows a fixing implement according to the third embodiment of the present invention.
In the third embodiment, a cutout portion 15 is formed by cutting out the male screw portion 11 from the distal end thereof in a belt-like shape to enable the fixing implement to be used at a place on which vibration or other external force is exerted. Since this fixing implement is simple in the shape of the cutout portion as compared with the first and second embodiments, it is possible to reduce the processing man-hour and produce it at low cost.
In the fixing implement, though the transverse groove is omitted, the nut section 2 is crushed to enter the vertical band-shaped cutout portion 15 to prevent relative rotation between the nut section 2 and the bolt section 1, thereby enabling infallible looseness prevention.

Furthermore, the head portion 10 of the bolt section 1 is provided on the side surface thereof with a cut-off reference portion 16 at a position corresponding to that of the cutout portion 15. This reference portion 15 serves as a target for applying pressure the cylindrical portion 21 of the nut section to crush the cylindrical portion to enter the cutout portion 15. That is to say, when crushing the cylindrical portion 21, by applying pressure to the position in the same diametrical direction as that of the reference portion 16, it is possible to supplementarily confirm the position of the cutout portion 15 hindered under the cylindrical portion 21. The reference portion 16 may optionally be selected from a projection, a concave, an arrowhead and the like besides the cut-off shape insofar as it serves as a marker.

Furthermore, the base portion 20 of the nut section 2 is provided on the side surface thereof with another reference portion 24 for indicating the position of nut rotation. With this, when fixing the bolt section 1, in the case of the head portion 10 is difficult to see, the reference portion can serve as a target used in grasping the position of the cutout portion 15 when positioning the crushing tool. The reference portion 16 of the bolt section 1 and the reference portion 24 of the nut section 2 can be provided appropriately as occasion demands.

In addition, though not shown, formation of plural gearwheel-shaped convexes on the inner circumference of the cylindrical portion of the nut section, for example, enables the convexes to be caved in to enter plural cutout portions of the bolt section when having fastened the cylindrical portion with a tool, thereby fitting the convexes into the cutout portions to obtain firm fixation.
Furthermore, insofar as the bolt and nut sections has a configuration in which the thread cutout portion and the cylindrical portion provided at the position corresponding to that of the thread cutout portion for use in being fastened can fix the bolt and nut sections by fastening, various embodiments can be provided in addition to the embodiments in which the shapes of the cutout portion and cylindrical portion are changed.

### Brief Description of the Drawings:

[FIG. 1] It is an explanatory view showing a fixing implement according to the first embodiment of the present invention, (a) being a perspective view of a bolt section and (b) being a perspective view of a nut section.
[FIG. 2] It is a partially cutaway enlarged perspective view showing a fixing state of the fixing implement of FIG. 1.
[FIG. 3] It is an explanatory view showing the fixing implement of FIG. 1, (a) being a front view of the bolt section and (b) being a bottom view of the bolt section.
[FIG. 4] It is a front view showing a crushing tool.
[FIG. 5] It is an explanatory view showing a fixing process of the fixing implement of FIG. 1.
[FIG. 6] It is a partially cutaway front view showing the fixing state of the fixing implement of FIG. 1.
[FIG. 7] It is an enlarged cross section taken along line A-A in FIG. 6.
[FIG. 8] It is a perspective view showing a fixing implement according to the second embodiment of the present invention.
[FIG. 9] It is a perspective view showing a fixing implement according to the third embodiment of the present invention.

### Explanation of Reference Numerals:

- 1A: Fixing implement body
- 1: Bolt section
- 2: Nut section
- 3: Crushing tool
- 10: Head portion
- 11: Male screw portion
- 12: Cutout portion
- 16: Reference portion
- 21: Cylindrical portion

### Examples:

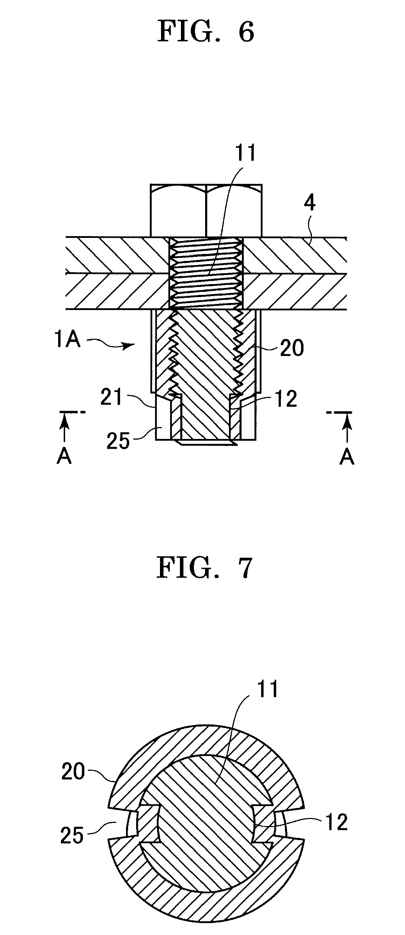

In the third embodiment of FIG. 9, the male screw portion 11 of the bolt section 1 made of an aluminum alloy had an outside diameter of 10 mm and the cutout portion 12 had a width of 4 mm and a length of 8 mm from the distal end of the male screw portion. The cylindrical portion 21 of the nut section 2 had a width of 6 mm and, after inserting the bolt section 1 into the hole portion 40 in the member 4 of FIG. 6 to be fixed, the nut section 2 was screw-fitted to the bolt section 1.

In addition, the cylindrical portion 21 was fastened with a pressure of 3.2 kgf ·m by means of the crushing tool 3 and crushed so that the crush portion might be inserted under pressure into the cutout portion 12.
Thereafter, the fixing state is tested, with return torque applied to the fixing implement. As a result, the bolt and nut sections were relatively moved when the applied return torque was 2.2 kgf ·m.

According to the return torque prescribed by JISB1056, a curved M10 bolt may endure a return torque of 1.5 kgf ·m or more. Therefore, it was proved that the fixing implement of the embodiment fully satisfied the aforementioned torque value.

For the comparison with the fixing implement of FIG. 9, a fixing implement was prepared, in which a cylindrical portion of a nut section was provided therein with a female screw portion and the nut section was provided with a female screw portion over the entire inner circumference. In consequence of fastening (calking) the nut section onto a bolt section, it was found that application of a larger pressure than in the case of the fixing implement of FIG. 9 was required. It was found from this fact that in the case of the cylindrical portion of the fixing implement of FIG. 9, a small fastening force can deform the cylindrical portion relative to the cutout portion to produce the crush portion with ease.

Each of the fixing implements in the first and second embodiments of FIG. 1 and FIG. 8 has the cutout portion of a cruciform shape or the like to perform fastening and fixing in both the axial direction and the diametrical direction. Therefore, it is possible to further heighten the return torque as compared with the fixing implement of FIG. 9 to exhibit the effect of further excellent withdrawal prevention.

### Industrial Applicability:

The fixing implement according to the present invention can be used not only around roads or railroads, but also any other place where fastening by a bolt and a nut is required. Particularly, when it is used at a place prone to receive vibration or other external force, it can exhibit the excellent effect of looseness prevention and maintain a firmly screw-fitted state over a long period of time.

## Claims

1. A fixing implement comprising a bolt section that has a male screw portion having part thereof provided with a thread cutout portion formed to have an appropriate groove width in an axial direction, and a nut section that has an extending cylindrical portion at a position corresponding to a position of the thread cutout portion when the nut section has been fastened and screw-fitted to the bolt section, the cylindrical portion, when having been crushed by application of pressure in a diameter-reducing direction with a tool including a crushing tool after fixing and screw-fitting the bolt and nut sections at a prescribed position, entering the thread cutout portion to fasten and screw-fit the nut section to the bolt section.

2. A fixing implement comprising a bolt section that has a male screw portion having part thereof provided with a thread cutout portion formed to have appropriate groove widths in axial and diametrical directions, and a nut section that has an extending cylindrical portion at a position corresponding to a position of the thread cutout portion when the nut section has been fastened and screw-fitted to the bolt section, the cylindrical portion, when having been crushed by application of pressure in a diameter-reducing direction with a tool including a crushing tool after fixing and screw-fitting the bolt and nut sections at a prescribed position, entering the thread cutout portion to fasten and screw-fit the nut section to the bolt section.

3. A fixing implement according to claim 1 or claim 2, wherein the thread cutout portion is formed at two or more places in a diametric direction of the male screw portion of the bolt section.

4. A fixing implement according to any one of claims 1 to 3, wherein the bolt section has a head portion provided with a reference portion indicating a position of the thread cutout portion.
